# EUROPÄISCHE PATENTSCHRIFT

(11) **EP 4 303 826 B1**
(45) Veröffentlichungstag und Bekanntmachung des Hinweises auf die Patenterteilung: **25.11.2026**
(21) Anmeldenummer: 23183231.2
(22) Anmeldetag: 04.07.2023
(51) Int. Cl.: G06V 10/82, G06V 10/764, G06V 20/56

(54) **VORRICHTUNG UND VERFAHREN ZUR KLASSIFIKATION VON OBJEKTEN**
DEVICE AND METHOD FOR CLASSIFYING OBJECTS
DISPOSITIF ET PROCÉDÉ DE CLASSIFICATION D'OBJETS

(30) Priorität: 05.07.2022 DE 102022116767
(43) Veröffentlichungstag der Anmeldung: 10.01.2024
(73) Patentinhaber: STILL GmbH, 22113 Hamburg (DE)
(72) Erfinder: SCHÜTHE, Dennis, 21255 Tostedt (DE); ABEL, Bengt, 21335 Lüneburg (DE); RUDALL, Yan, 22453 Hamburg (DE); BAKR, Mohamed, 21073 Hamburg (DE)
(74) Vertreter: Patentship Patentanwaltgesellschaft

(56) Entgegenhaltungen:
- US-A1- 2016 304 281
- US-A1- 2021 398 161
- MONKA SEBASTIAN ET AL: "A survey on visual transfer learning using knowledge graphs", SEMANTIC WEB, vol. 13, no. 3, 27 January 2022 (2022-01-27), pages 477 - 510, XP093309666, ISSN: 1570-0844, DOI: 10.3233/SW-212959

## Beschreibung

Die Erfindung betrifft eine Vorrichtung und ein Verfahren zur Klassifikation von Objekten in einer Umgebung. Ferner betrifft die Erfindung ein Flurförderzeug oder einen Industrieroboter mit einer solchen Vorrichtung. Die Erfindung ist in den angehängten Ansprüchen definiert.

Die Detektion, Erkennung oder Segmentierung von Objekten in einer Umgebung, beispielsweise in einem Warenlager, basiert üblicherweise auf Mobilitätstypen der Objekte, beispielsweise basierend auf einer Klassifizierung in dynamische, semi-dynamische und statische Klassen. Dabei können neuronale Netzwerke zum Einsatz kommen, die jedoch unbekannte Objekte, d.h. beispielsweise Objekte, auf die die neuronalen Netzwerke nicht trainiert sind, oft nicht eindeutig oder falsch klassifizieren können.

Die US 2016 / 304 281 A1 offenbart ein System zur autonomen Auftragserfüllung und Bestandsverwaltung innerhalb eines Lagers.

Der vorliegenden Erfindung liegt die Aufgabe zugrunde, eine Vorrichtung und ein Verfahren zur alternativen Klassifikation von Objekten in einer Umgebung bereitzustellen.

Diese Aufgabe wird gemäß einem ersten Aspekt der Erfindung durch eine Vorrichtung zum Klassifizieren einer Vielzahl von Objekten in einer Umgebung gelöst. Die Vorrichtung umfasst eine Kommunikationsschnittstelle, welche ausgebildet ist, von wenigstens einem Sensor eine Vielzahl von Sensordaten der Vielzahl von Objekten fortlaufend zu erhalten. Die Vorrichtung umfasst ferner eine Prozessoreinrichtung, welche ausgebildet, jedem Objekt der Vielzahl von Objekten auf der Grundlage der Vielzahl von Sensordaten jeweils einen Mobilitätstyp einer Vielzahl von Mobilitätstypen fortlaufend zuzuweisen. Die Vielzahl von Mobilitätstypen umfassen einen statischen, einen semi-dynamischen und einen dynamischen Mobilitätstyp. Die Prozessoreinrichtung ist ferner ausgebildet, auf der Grundlage einer Vielzahl von Objektrelationen den einem jeweiligen Objekt zugewiesenen Mobilitätstyp zu überprüfen.

Die Umgebung ist beispielsweise ein Warenlager.

Unter dynamischen Mobilitätstypen werden vorzugsweise alle Objekte verstanden, die sich selbstständig bewegen können. Unter semi-dynamischen Mobilitätstypen werden vorzugsweise alle Objekte verstanden, die bewegbar sind und von einer Person oder einem Fahrzeug, insbesondere Flurförderfahrzeug, manipuliert werden können. Unter statischen Mobilitätstypen werden vorzugsweise alle Objekte verstanden, die sich fix an einer Position befinden und nie bis fast nie ändern.

Die Objektrelationen können beispielsweise semantische Objektrelationen sein, um die Umgebung zu interpretieren. Durch die Objektrelationen werden Objekte in ein Verhältnis zueinander gesetzt, um einen zugewiesenen Mobilitätstyp zu überprüfen. Die Überprüfung auf Grundlage der Vielzahl von Objektrelationen können beispielsweise auch entsprechende temporale Informationen der Objektrelationen umfassen, wie beispielsweise eine Zeitdauer der entsprechenden Objektrelationen.

In einer Ausführungsform ist die Prozessoreinrichtung ferner ausgebildet, auf der Grundlage der Überprüfung des einem jeweiligen Objekt zugewiesenen Mobilitätstyps dem jeweiligen Objekt einen anderen Mobilitätstyp der Vielzahl von Mobilitätstypen zuzuweisen.

In einer Ausführungsform ist die Prozessoreinrichtung ferner ausgebildet, auf der Grundlage der Überprüfung des einem jeweiligen Objekt zugewiesenen Mobilitätstyps eine Fehlermeldung zu erzeugen.

In einer Ausführungsform ist die Prozessoreinrichtung ausgebildet, ein neuronales Netzwerk zu implementieren. Das neuronale Netzwerk ist ausgebildet, jedem Objekt der Vielzahl von Objekten auf der Grundlage der Vielzahl von Sensordaten jeweils einen Mobilitätstyp der Vielzahl von Mobilitätstypen zuzuweisen.

In einer Ausführungsform ist die Prozessoreinrichtung ausgebildet, ein weiteres neuronales Netzwerk zu implementieren. Das weitere neuronale Netzwerk ist ausgebildet, auf der Grundlage der Vielzahl von Objektrelationen den einem jeweiligen Objekt zugewiesenen Mobilitätstyp zu überprüfen.

In einer Ausführungsform ist die Prozessoreinrichtung ferner ausgebildet, jedem Objekt der Vielzahl von Objekten auf der Grundlage der Vielzahl von Sensordaten jeweils einen Objekttyp einer Vielzahl von Objekttypen zuzuweisen und auf der Grundlage der Vielzahl von Objektrelationen und dem einen jeweiligen Objekt zugewiesenen Objekttyp den einem jeweiligen Objekt zugewiesenen Mobilitätstyp zu überprüfen.

In einer Ausführungsform umfasst die Vielzahl von Objekttypen einen Ladungsträger, eine Gitterbox, eine Palette, eine Ware, ein Regal, eine Person, ein Flurförderzeug, ein Industrieroboter, eine Wand, eine Säule, eine Decke, einen Boden und/oder eine Rauminfrastruktur.

Unter Ladungsträgern können vorzugsweise Hilfsmittel verstanden werden, die dazu dienen eine Ladung, insbesondere umfassend eine oder mehrere Packungen, insbesondere Verpackungseinheiten, zu einer Ladungseinheit zusammenzufassen.

In einer Ausführungsform umfasst die Vielzahl von Sensordaten eine Vielzahl von Bilddaten der Vielzahl von Objekten. Die Prozessoreinrichtung ist ferner ausgebildet, die Vielzahl von Bilddaten zu segmentieren, um jedem Objekt der Vielzahl von Objekten jeweils einen Objekttyp zuzuweisen.

In einer Ausführungsform ist die Prozessoreinrichtung ferner ausgebildet, die Vielzahl von Objektrelationen zu generieren.

In einer Ausführungsform ist die Prozessoreinrichtung ferner ausgebildet, auf der Grundlage der Vielzahl von Sensordaten der Vielzahl von Objekten eine digitale Karte der Umgebung zu erstellen. Die detektierten und segmentierten Objekte können beispielsweise gespeichert werden, so dass eine Karte der Umgebung mit den Objekttypen und der Segmentierung entsteht.

In einer Ausführungsform ist die Prozessoreinrichtung ferner ausgebildet, auf der Grundlage der Vielzahl von Objektrelationen und einem oder mehreren dem einen jeweiligen Objekt in der Vergangenheit zugewiesenen Mobilitätstyps den einem jeweiligen Objekt zugewiesenen Mobilitätstyp, insbesondere aktuell zugewiesenen Mobilitätstyp, zu überprüfen.

Die Aufgabe wird gemäß einem zweiten Aspekt der Erfindung durch ein Flurförderzeug oder einen Industrieroboter zum Befördern eines Ladungsträgers gelöst. Das Flurförderzeug oder der Industrieroboter umfasst wenigstens einen Sensor, welcher ausgebildet ist, eine Vielzahl von Sensordaten einer Vielzahl von Objekten in einer Umgebung zu erfassen, insbesondere fortlaufend. Das Flurförderzeug oder der Industrieroboter umfasst ferner eine Vorrichtung gemäß dem ersten Aspekt, welche ausgebildet ist, die Vielzahl von Objekten in der Umgebung zu klassifizieren.

In einer Ausführungsform umfasst der wenigstens eine Sensor eine 2D-Kamera, eine 3D-Kamera, einen Radar-Sensor und/oder einen LiDAR-Sensor.

Das Flurförderzeug oder der Industrieroboter gemäß dem zweiten Aspekt der Erfindung umfasst die Vorrichtung gemäß dem ersten Aspekt der Erfindung. Daher ergeben sich weitere möglichen Ausführungsformen des Flurförderzeugs oder des Industrieroboters gemäß dem zweiten Aspekt der Erfindung aus den vorstehend und nachstehend beschriebenen weiteren Ausführungsformen der Vorrichtung gemäß dem ersten Aspekt der Erfindung.

Die Aufgabe wird gemäß einem dritten Aspekt der Erfindung gelöst durch ein Verfahren zum Klassifizieren einer Vielzahl von Objekten in einer Umgebung. Das Verfahren umfasst die folgenden Schritte:
Erhalten einer Vielzahl von Sensordaten der Vielzahl von Objekten von wenigstens einem Sensor;
Zuweisen eines Mobilitätstyps einer Vielzahl von Mobilitätstypen zu jedem Objekt der Vielzahl von Objekten auf der Grundlage der Vielzahl von Sensordaten, wobei die Vielzahl von Mobilitätstypen einen statischen, einen semi-dynamischen und einen dynamischen Mobilitätstyp umfassen; und
Überprüfen des einem jeweiligen Objekt zugewiesenen Mobilitätstyps auf der Grundlage einer Vielzahl von Objektrelationen.

Das Verfahren gemäß dem dritten Aspekt der Erfindung kann mittels der Vorrichtung gemäß dem ersten Aspekt der Erfindung durchgeführt werden. Daher ergeben sich weitere möglichen Ausführungsformen des Verfahrens gemäß dem dritten Aspekt der Erfindung aus den vorstehend und nachstehend beschriebenen weiteren Ausführungsformen der Vorrichtung gemäß dem ersten Aspekt der Erfindung.

Weitere Vorteile und Einzelheiten der Erfindung werden beispielhaft anhand der in den schematischen Figuren dargestellten Ausführungsbeispielen näher erläutert. Hierbei zeigt:
- Figur 1: eine schematische Darstellung einer Vorrichtung gemäß einer Ausführungsform zum Klassifizieren einer Vielzahl von Objekten in einer Umgebung;
- Figur 2: eine schematische Darstellung eines Flurförderzeugs oder Industrieroboters gemäß einer Ausführungsform zum Befördern eines Ladungsträgers;
- Figur 3: eine schematische Darstellung einer Umgebung des Flurförderzeugs oder Industrieroboters gemäß einer Ausführungsform;
- Figur 4: ein Flurförderfahrzeug bzw. einen Industrieroboter gemäß einer Ausführungsform und ein Mensch-Hubwagen-Paletten-Gespann; und
- Figur 5: ein Flussdiagramm, welches Schritte eines Verfahrens zum Klassifizieren einer Vielzahl von Objekten in einer Umgebung illustriert.

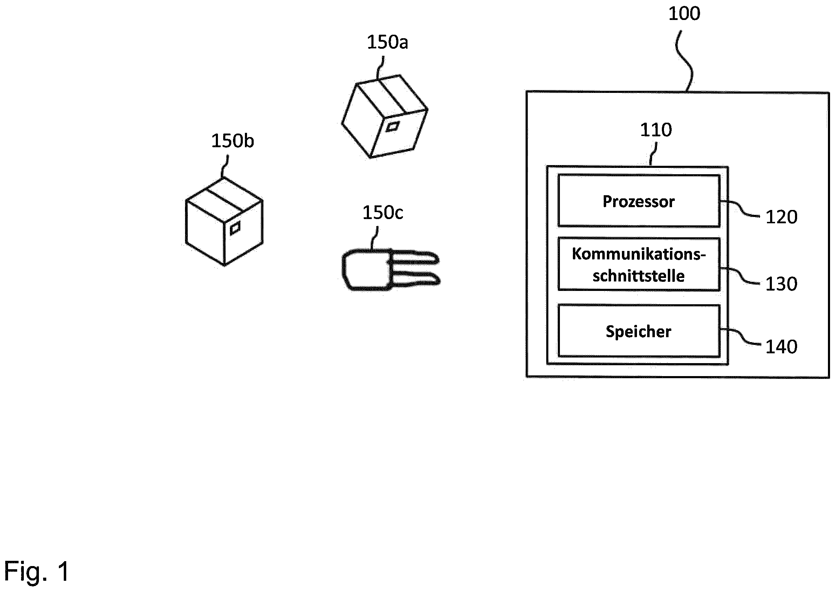

Figur 1 zeigt eine schematische Darstellung einer Vorrichtung 110 gemäß einer Ausführungsform zum Klassifizieren einer Vielzahl von Objekten 150a-c in einer Umgebung. Wie in Figur 1 dargestellt, kann die Vorrichtung 110 Teil eines Flurförderzeugs 100 oder Industrieroboters 100 sein.

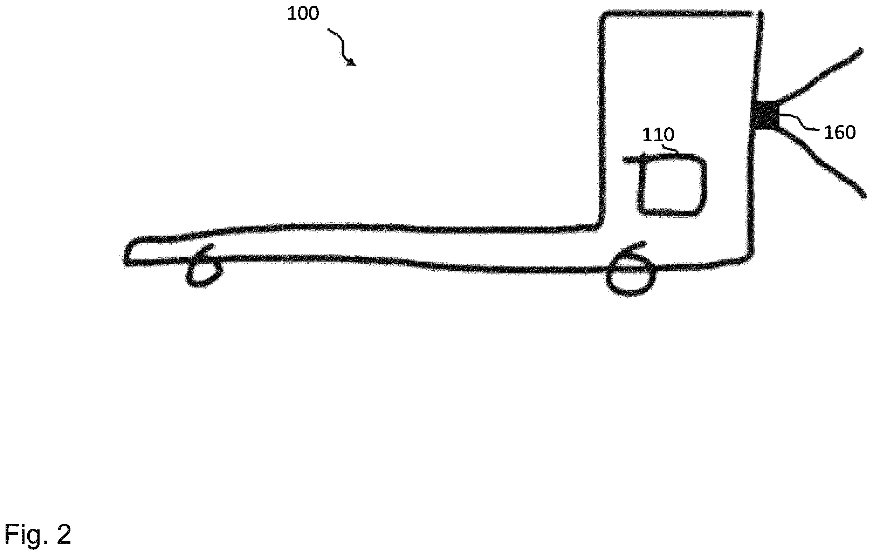

Die Vorrichtung 110 umfasst eine Kommunikationsschnittstelle 130, welche ausgebildet ist, von wenigstens einem in Figur 2 dargestellten Sensor 160 eine Vielzahl von Sensordaten der Vielzahl von Objekten 150a-b zu erhalten. Die Vorrichtung 110 umfasst ferner eine Prozessoreinrichtung 120.

Die Vorrichtung 110 kann ferner einen nichtflüchtigen Speicher 140 umfassen. Der nichtflüchtige Speicher 140 kann ausgebildet sein, Daten und ausführbaren Programmcode zu speichern, der, wenn von der Prozessoreinrichtung 120 der Vorrichtung 110 ausgeführt, die Prozessoreinrichtung 120 veranlasst, die im Folgenden beschriebenen Funktionen, Operationen und Verfahren durchzuführen.

Die Prozessoreinrichtung 120, insbesondere ein durch die Prozessoreinrichtung 120 implementiertes neuronales Netzwerk, ist ausgebildet, jedem Objekt 150a-c der Vielzahl von Objekten 150a-c auf der Grundlage der Vielzahl von Sensordaten jeweils einen Mobilitätstyp einer Vielzahl von Mobilitätstypen zuzuweisen. Die Vielzahl von Mobilitätstypen umfassen einen statischen, einen semi-dynamischen und einen dynamischen Mobilitätstyp.

Die Prozessoreinrichtung 120, insbesondere ein durch die Prozessoreinrichtung 120 implementiertes weiteres neuronales Netzwerk, ist ferner ausgebildet, auf der Grundlage einer Vielzahl von Objektrelationen den einem jeweiligen Objekt 150a-c zugewiesenen Mobilitätstyp zu überprüfen. Die Prozessoreinrichtung 120 kann ferner ausgebildet sein, auf der Grundlage der Überprüfung des einem jeweiligen Objekt 150a-c zugewiesenen Mobilitätstyps dem jeweiligen Objekt 150a-c einen anderen Mobilitätstyp der Vielzahl von Mobilitätstypen zuzuweisen.

Die Vielzahl von Sensordaten kann eine Vielzahl von Bilddaten der Vielzahl von Objekten 150a-c umfassen. Die Prozessoreinrichtung 120 kann ferner ausgebildet sein, die Vielzahl von Bilddaten zu segmentieren, um jedem Objekt 150a-c der Vielzahl von Objekten 150a-c jeweils einen Objekttyp zuzuweisen.

Die Prozessoreinrichtung 120 kann ferner ausgebildet sein, jedem Objekt 150a-c der Vielzahl von Objekten 150a-c auf der Grundlage der Vielzahl von Sensordaten jeweils einen Objekttyp einer Vielzahl von Objekttypen zuzuweisen und auf der Grundlage der Vielzahl von Objektrelationen und dem einen jeweiligen Objekt 150a-c zugewiesenen Objekttyp den einem jeweiligen Objekt 150a-c zugewiesenen Mobilitätstyp zu überprüfen. Die Vielzahl von Objekttypen können beispielsweise einen Ladungsträger, eine Gitterbox, eine Palette, eine Ware, ein Regal, eine Person, ein Flurförderzeug, ein Industrieroboter, eine Wand, eine Säule, eine Decke, einen Boden und/oder eine Rauminfrastruktur umfassen.

Figur 2 zeigt eine schematische Darstellung des Flurförderzeug 100 oder Industrieroboters 100 gemäß einer Ausführungsform zum Befördern eines Ladungsträgers. Bei dem Flurförderzeug 100 kann es sich insbesondere um ein autonomes Flurförderzeug 100 handeln, beispielsweise ein für den fahrerlosen und/oder autonom agierenden Betrieb ausgebildetes Flurförderzeug 100. Bei dem Industrieroboter 100 kann es sich insbesondere um einen Kommissionierroboter 100 handeln.

Wie in der Figur 2 dargestellt, umfasst das Flurförderzeug 100 oder der Industrieroboter 100 wenigstens einen Sensor 160, welcher ausgebildet ist, eine Vielzahl von Sensordaten einer Vielzahl von Objekten 150a-c in einer Umgebung zu erfassen. Das Flurförderzeug 100 oder der Industrieroboter 100 umfasst ferner die zur Figur 1 beschriebene Vorrichtung 110, welche ausgebildet ist, die Vielzahl von Objekten 150a-c in der Umgebung zu klassifizieren. Der wenigstens eine Sensor 160 kann eine 2D-Kamera, eine 3D-Kamera, einen Radar-Sensor und/oder einen LiDAR-Sensor umfassen.

Auch wenn in der Figur 2 der wenigstens eine Sensor 160 nur an einer Seite des Flurförderzeug 100 bzw. des Industrieroboters 100 dargestellt ist, kann der wenigstens eine Sensor geeignet auf oder an der Karosserie des Flurförderzeug 100 bzw. des Industrieroboters 100 angeordnet sein, um die Umgebung zu erfassen. Beispielsweise kann der zumindest eine Sensor 160 auf oder an einer Oberseite, einer Unterseite, einer Seitenfläche, einer Lastaufnahmeeinrichtung, einer Vorderseite und/oder einer Rückseite des Flurförderzeug 100 bzw. des Industrieroboters 100 angeordnet sein.

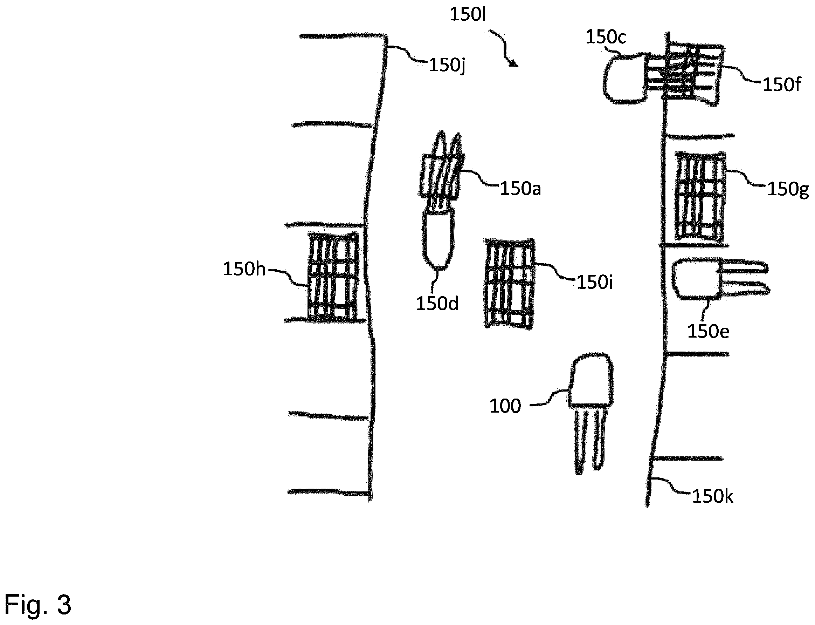

Figur 3 zeigt eine schematische Darstellung der Umgebung des Flurförderzeugs 100 oder Industrieroboters 100 gemäß einer Ausführungsform. Die Figur 3 zeigt schematisch Objekte 150c-e, die durch die Prozessoreinrichtung 120 beispielsweise dem Objekttyp Flurförderzeug zugewiesen werden können, Objekte 150f-i, die durch die Prozessoreinrichtung 120 beispielsweise dem Objekttyp Palette zugewiesen werden können, Objekte 150j-k , die durch die Prozessoreinrichtung 120 beispielsweise dem Objekttyp Regal zugewiesen werden können und ein Objekt 150l, das durch die Prozessoreinrichtung 120 beispielsweise dem Objekttyp Regalgang zugewiesen werden kann. Wie zu den Figuren 1 und 2 beschrieben, ist die Prozessoreinrichtung 120 ausgebildet, auf der Grundlage einer Vielzahl von Objektrelationen den einem jeweiligen Objekt 150a-l zugewiesenen Mobilitätstyp zu überprüfen.

Die Prozessoreinrichtung 120 kann ausgebildet sein, die Vielzahl von Objektrelationen zu generieren. Die Objektrelationen können beispielsweise semantische Objektrelationen sein. Durch die Objektrelationen können die Objekte 150a-l in ein Verhältnis zueinander gesetzt werden, um einen zugewiesenen Mobilitätstyp zu überprüfen. Die Überprüfung auf Grundlage der Vielzahl von Objektrelationen können beispielsweise auch entsprechende temporale Informationen der Objektrelationen umfassen, wie beispielsweise eine Zeitdauer der entsprechenden Objektrelationen.

Wie in der Figur 3 beispielhaft durch das Objekt 150e gezeigt, kann ein dynamisches Flurförderfahrzeug, also dem Mobilitätstyp "dynamisch" zugewiesenes Objekt 150e mit dem zugewiesenen Objekttyp "Flurförderzeug", im Objekt 150k (beispielhaft Mobilitätstyp "statisch", Objekttyp "Regal) zum Stehen, beispielsweise in einem Warenlager zur kurzzeitigen Ein- oder Auslagerung von Ware, also in einem vorbestimmten Zeitraum von beispielsweise weniger als fünf Minuten. Steht aber das Objekt beispielsweise 150e eine lange Zeit, beispielsweise mehr als fünf Minuten, in dem Objekt 150k, kann die Prozessoreinrichtung 120 ausgebildet sein, das Objekt 150e dem Mobilitätstyp "semidynamisch" zuzuordnen. Somit kann die Prozessoreinrichtung 120 beispielsweise feststellen, dass in einem Warenlager, Flurförderzeuge als Ware gelagert werden und sich in einem Regal semantisch gesehen nur semi-dynamische Objekte 150f-g befinden sollten. Alternativ oder zusätzlich kann beispielsweise die Prozessoreinrichtung 120 ausgebildet sein, wenn sich ein Objekt 150a-l, wie beispielsweise das Objekt 150e, im Objekt 150k für längere Zeit befindet, beispielsweise mehr als fünf Minuten und/oder viel mehr als 5 Minuten, dann kann das Objekt 150e auch dem Mobilitätstyp "statisch" zugeordnet werden, womit es aus Zuordnungssicht für die Lagerzeit mit dem Objekt 150k "verschmilzt".

Die Prozessoreinrichtung 120 kann ausgebildet sein, auf der Grundlage der Vielzahl von Objektrelationen und einem oder mehreren dem einen jeweiligen Objekt 150a-k in der Vergangenheit zugewiesenen Mobilitätstyps den einem jeweiligen Objekt 150a-k zugewiesenen Mobilitätstyp zu überprüfen. Die Prozessoreinrichtung 120 kann ferner ausgebildet sein, auf der Grundlage der Überprüfung des einem jeweiligen Objekt 150a-k zugewiesenen Mobilitätstyps dem jeweiligen Objekt 150a-k einen anderen Mobilitätstyp der Vielzahl von Mobilitätstypen zuzuweisen.

In dem Speicher 140 können ursprüngliche, erste Mobilitätstypen und aktuell zugewiesene, zweite Mobilitätstypen gespeichert sein. Die Prozessoreinrichtung 120 kann ausgebildet sein, eine von dem ersten Mobilitätstyp abweichende Änderung des zweiten Mobilitätstyps für bestimmte Objekttypen zu verhindern, beispielsweise um einen Entscheidungsprozess zu vereinfachen. Die bestimmten Objekttypen können beispielsweise Einrichtungsgegenstände bzw. Infrastrukturobjekte sein, die nicht beweglich sind, wie beispielsweise Regale, Wände, Säulen, Wege, Boden. Diese bestimmten Objekttypen können dann beispielsweise auf dem Mobilitätstyp "statisch" fixiert werden.

Der erste Mobilitätstyp kann beispielsweise generell fixiert sein und der zweite Mobilitätstyp generell veränderlich sein, falls nicht durch weitere Regeln eingeschränkt. Beispielsweise können je nach Objekttyp den ersten Mobilitätstypen vordefinierte Werte gegeben werden, wie beispielsweise der erste Mobilitätstyp "dynamisch" für den Objekttyp "Flurförderfahrzeug" oder beispielsweise der erste Mobilitätstyp "semi-dynamisch" für den Objekttyp "Palette". So kann durch die Prozessoreinrichtung 120 festgestellt werden, wo in der Umgebung sich ein Objekttyp gerade befindet. Beispielsweise kann bei erstem Mobilitätstyp "semi-dynamisch" und zweitem Mobilitätstyp "dynamisch" bei einem Objekttyp "Palette" beispielsweise festgestellt werden, wie in der Figur 3 beispielhaft für das Objekt 150a dargestellt, dass das entsprechende Objekt 150a sich aktuell auf einem Flurförderzeug befindet.

Gemäß einem ersten Modus der Prozessoreinrichtung 120, der eine aktuelle Situation in der Umgebung beurteilt, können die Objekte 150j-k beispielhaft in einem Szenario mit dem Objekttyp "Regal" und dem Mobilitätstyp "statisch" klassifiziert sein. Befinden sich innerhalb der Objekte 150j-k Objekte 150c-e mit dem Objekttyp "Flurförderzeug", die aktuell als dynamische Objekte klassifiziert sind, so kann dies als Anomalie eingestuft werden. Gemäß einer Entscheidungsregel können dynamische Objekte wie Flurförderfahrzeuge nicht in statischen Objekten wie Regalen vorkommen, und in Regalen nur semidynamische Objekte vorkommen. Die Entscheidungslogik gemäß dem ersten Modus der Prozessoreinrichtung 120 würde somit beispielsweise die Klassifikation des Objekts 150e im Regal ändern und von dynamisch auf semidynamisch ändern. Hierbei kann verlangt sein, dass die Objektgrenzen von Flurförderfahrzeug und Regal zu 100% ineinander liegen. Wäre das Fahrzeug nur zu 90% im Regal, könnte es gemäß dem ersten Modus weiterhin als dynamisch betrachtet werden.

Gemäß einem zweiten Modus der Prozessoreinrichtung 120, der neben der aktuellen Situation der Umgebung auch temporale Informationen, beispielsweise eine zeitliche Veränderung der Mobilitätstypen und/oder Position der Objekte 150a-k, beurteilt, würde bei einer 100% Überdeckung von Objekt 150e und Objekt 150k die zeitliche Abfolge mit in Betracht gezogen. Da das dynamische Flurförderfahrzeug seine Position über die Zeit verändern würde, würde die Prozessoreinrichtung 120 also mehrere Klassifikationen von unterschiedlichen Zeitpunkten vergleichen und erst eine Anomalie ermitteln, wenn das Objekt 150e stillsteht, insbesondere länger als ein vorbestimmter Zeitraum, wie beispielsweise fünf Minuten. Dann kann die Klassifikation, der Mobilitätstyp also von dynamisch in semi-dynamisch geändert werden. Andernfalls, falls das Objekt 150e die Position über die Zeit verändert, kann die Klassifikation beibehalten werden. Die Klassifikation durch Änderung des Mobilitätstyps als semidynamisches Objekt 150e kann hierbei auch für die vergangenen Zeitschritte erfolgen.

Die Prozessoreinrichtung 120 kann ferner ausgebildet sein, auf der Grundlage der Überprüfung des einem jeweiligen Objekt 150a-k zugewiesenen Mobilitätstyps eine Fehlermeldung zu erzeugen.

In einem beispielhaften Szenario wird in einem als statisch klassifizierten Objekt 150l vom Objekttyp "Regalgang", wo sich in der Regel nur dynamische Objekte 150a-l befinden, wie beispielsweise Flurförderfahrzeuge oder Personen, ein Objekt 150i abgestellt, das als semi-dynamisch klassifiziert ist. Nach dem ersten Modus der Prozessoreinrichtung 120 kann das Objekt 150i als Anomalie festgestellt werden. Hier erfolgt nun von der Prozessoreinrichtung 120 eine Fehlermeldung, beispielsweise an einen Operator oder ein Warenmanagementsystem, dass das Objekt 150i vermutlich unerlaubt abgestellt wurde.

Nach dem zweiten Modus der Prozessoreinrichtung 120 kann die zeitliche Abfolge mit einbezogen werden. Wird das Objekt 150i über einen vorbestimmten Zeitraum, der manuell festgelegt werden kann, beispielsweise auf fünf Minuten, nicht bewegt, so kann die Prozessoreinrichtung 120 ausgebildet sein, das Objekt 150i erst nach Ablauf dieses Zeitraums als Anomalie festzustellen und die entsprechende Fehlermeldung auszusenden. Hier kann beispielsweise bei einem Operator nachgefragt werden, wie zu verfahren ist, oder es kann eine automatische Aktion ausgeführt werden, wie beispielsweise ein Verschieben des Objekts 150i in das Objekt 150j oder Objekt 150k, beispielsweise basierend auf Informationen aus dem Warenmanagementsystem.

Ferner kann beispielsweise der Transport eines Objekts 150i von einem Flurförderfahrzeug durch die Prozessoreinrichtung 120 analysiert werden. Das beispielsweise aktuell semi-dynamische klassifizierten Objekt 150i kann dann mit der oben beschriebenen Änderung des Mobilitätstyps zu einem dynamisch klassifizierten Objekt 150i werden, sobald diese von einem als Flurförderfahrzeug klassifizierten Objekt 150c-e oder durch das Flurförderfahrzeug 100 bzw. den Industrieroboter 100 aufgenommen sind. Damit wird, wenn das Objekt 150i sich in dem als Regalgang klassifizierten Objekt 150l befindet, keine Anomalie festgestellt, d.h. das Objekt 150i darf in dem Regalgang bleiben. Somit kann der Warenfluss effizienter beobachtet werden, da das Objekt 150i nun dynamisch klassifiziert unterwegs ist. Dies kann sowohl im ersten Modus als auch im zweiten Modus der Prozessoreinrichtung 120 erfolgen.

Der erste Modus und der zweite Modus der Prozessoreinrichtung 120 kann beispielsweise parallel, zeitlich versetzt oder jeweils manuell lokal durch einen Benutzer oder ferngesteuert durch einen Operator eingeschaltet werden. Beispielsweise kann automatisch von dem ersten Modus in den zweiten Modus gewechselt werden, falls eine Anomalie festgestellt wird.

Die Prozessoreinrichtung 120 kann ferner ausgebildet sein, auf der Grundlage der Vielzahl von Sensordaten der Vielzahl von Objekten 150a-c eine digitale Karte der Umgebung zu erstellen. Die Karte kann beispielsweise nach Erstellung in dem Speicher 140 abgespeichert werden und beispielsweise regelmäßig aktualisiert werden. Die Karte kann beispielsweise die detektierten und segmentierten Objekte 150a-c umfassen, so dass eine Karte der Umgebung mit den Objekttypen und der Segmentierung entsteht. Die Karte kann beispielsweise ferner die Fehlermeldungen und/oder die Anomalien anzeigen.

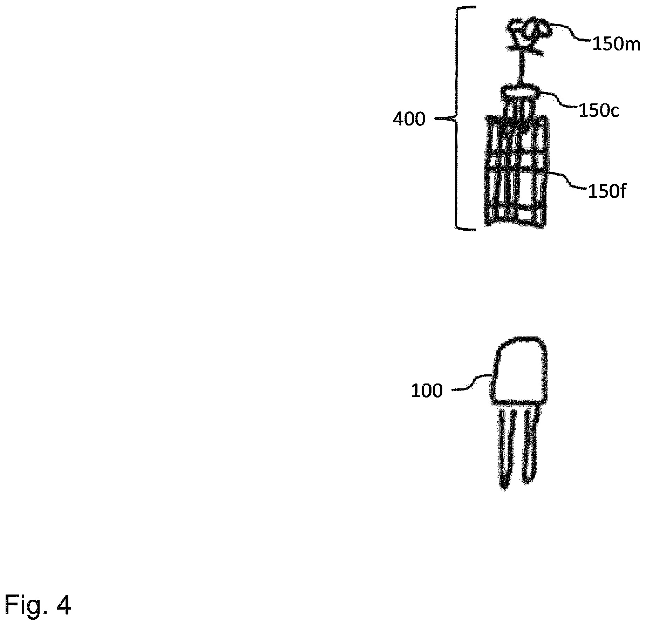

Figur 4 zeigt das Flurförderfahrzeug 100 bzw. den Industrieroboter 100 gemäß einer Ausführungsform und ein Mensch-Hubwagen-Paletten-Gespann 400. Wie in der Figur 4 beispielhaft dargestellt, kann das Mensch-Hubwagen-Paletten-Gespann 400 ein jeweils gemäß dem entsprechenden Mobilitätstyp als Person bzw. Mensch klassifiziertes Objekt 150m, ein als Hubwagen oder Flurförderfahrzeug klassifiziertes Objekt 150c und ein als Palette klassifiziertes Objekt 150f umfassen.

Hierbei kann durch die Prozessoreinrichtung 120 beispielsweise zur Erhöhung der Sicherheit ein Ausdehnen von Segmentierungen und Klassifizierungen erfolgen. So kann die Prozessoreinrichtung 120 den Objekten 150c,f,m, also einem Menschen, der einen Handhubwagen oder ein Flurförderfahrzeug bedient, worauf sich eine Palette befindet, die Klassifikation dynamisch und die Segmentierung Mensch durch die Änderung der jeweiligen Objekttypen und Mobilitätstypen zuweisen. Somit kann die Prozessoreinrichtung 120 erreichen, dass effizienter darauf geachtet wird, dass eine Berührung zwischen dem Flurförderfahrzeug 100 bzw. dem Industrieroboter 100 und dem Mensch-Hubwagen-Paletten-Gespann 400 zwingend vermieden wird.

Durch die Vorrichtung 110 kann somit die Verknüpfung von den klassifizierten Objekten 150a-m miteinander erreicht werden und durch den zeitlichen Verlauf kann eine Verbesserung der Objektklassifizierung erfolgen. Zudem können Anomalien effizient erkannt werden. Dabei ist beispielsweise eine Verknüpfung mit einem Warenmanagementsystem möglich.

So können auch unbekannte Objekte 150a-l klassifiziert werden. Üblicherweise gibt es nur wenige als dynamisch und statisch klassifizierte Objekte 150a-m in einem Warenlager und diese können somit effizient klassifiziert werden. Zudem sind dynamische Objekte häufig in Bewegung und statische Objekte häufig Teil einer Karte. Die Anzahl der semi-dynamischen Objekte 150a-m kann um eine Vielzahl höher als die der dynamischen oder statischen Objekte 150a-m sein. Daher können bei üblichen Ansätzen viele Objekte aus der semi-dynamischen Objektklasse nicht eindeutig klassifiziert werden. Nutzt man jedoch die oben beschriebene Objektrelationen der Objekte 150a-m, dann können auch unbekannte Objekte 150a-m als semi-dynamisch klassifiziert werden. Beispielsweise wenn ein Regal erkannt ist und wenn in dem Regal unbekannte Objekte 150a-m sind, dann kann davon ausgegangen werden, dass diese semi-dynamisch sind, d.h. positionstechnisch manipulierbar.

Basierend auf den Daten, die mit dem Vorrichtung 110 ermittelt werden, können zudem mittels lernender Verfahren, wie über das oben beschriebene neuronale Netzwerk und/oder das weitere neuronale Netzwerk, direkte Verbesserungen der Klassifikation ermöglicht werden und/oder Anomalien direkt erkannt werden, ohne einen zeitlichen Versatz zu bekommen. Weiterhin kann die Vorrichtung 110 genutzt werden, Prozesse im Großen zu optimieren, beispielsweise des Warenmanagementsystems, und Fehler, insbesondere Unfälle, zu vermeiden. Hierbei kann beispielsweise festgestellt werden, dass in einem Regalgang oft Paletten gelagert werden, wodurch Rückschluss auf eine zu große Auslastung der angrenzenden Regale getroffen werden kann. Ferner kann festgestellt werden, dass sich, insbesondere über einen längeren Zeitraum, wie beispielsweise mehr als fünf Minuten, eine Person in einem Regal befindet, wodurch ein Unfall oder eine Unfallgefahr ermittelt werden kann.

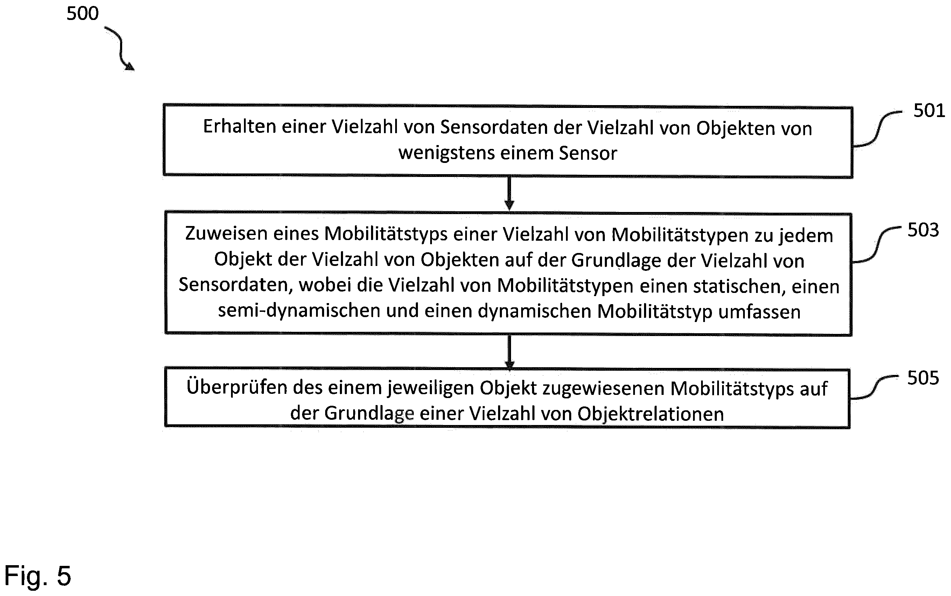

Figur 5 zeigt ein Flussdiagramm, welches Schritte eines Verfahrens 500 zum Klassifizieren einer Vielzahl der Objekte 150a-m in der Umgebung illustriert.

Das Verfahren 500 umfasst eine Schritt 501 eines Erhaltens einer Vielzahl von Sensordaten der Vielzahl von Objekten 150a-m von wenigstens einem Sensor 160.

Das Verfahren 500 umfasst ferner einen Schritt 503 eines Zuweisens eines Mobilitätstyps einer Vielzahl von Mobilitätstypen zu jedem Objekt 150a-m der Vielzahl von Objekten 150a-m auf der Grundlage der Vielzahl von Sensordaten, wobei die Vielzahl von Mobilitätstypen einen statischen, einen semi-dynamischen und einen dynamischen Mobilitätstyp umfassen.

Das Verfahren 500 umfasst ferner einen Schritt 505 eines Überprüfens des einem jeweiligen Objekt 150a-m zugewiesenen Mobilitätstyps auf der Grundlage der Vielzahl von Objektrelationen.

## Patentansprüche

1. Vorrichtung (110) zum Klassifizieren einer Vielzahl von Objekten (150a-m) in einer Umgebung, wobei die Vorrichtung (110) umfasst:
eine Kommunikationsschnittstelle (130), welche ausgebildet ist, von wenigstens einem Sensor (160) eine Vielzahl von Sensordaten der Vielzahl von Objekten (150a-m) fortlaufend zu erhalten; und
eine Prozessoreinrichtung (120), welche ausgebildet, jedem Objekt (150a-m) der Vielzahl von Objekten (150a-m) auf der Grundlage der Vielzahl von Sensordaten jeweils einen Mobilitätstyp einer Vielzahl von Mobilitätstypen fortlaufend zuzuweisen, wobei die Vielzahl von Mobilitätstypen einen statischen, einen semi-dynamischen und einen dynamischen Mobilitätstyp umfassen;
wobei die Prozessoreinrichtung (120) ferner ausgebildet ist, auf der Grundlage einer Vielzahl von Objektrelationen den einem jeweiligen Objekt (150a-m) zugewiesenen Mobilitätstyp zu überprüfen, wobei durch die Objektrelationen die Objekte (150a-m) in ein Verhältnis zueinander gesetzt werden, um einen zugewiesenen Mobilitätstyp zu überprüfen.

2. Vorrichtung (110) nach Anspruch 1, wobei die Prozessoreinrichtung (120) ferner ausgebildet ist, auf der Grundlage der Überprüfung des einem jeweiligen Objekt zugewiesenen Mobilitätstyps dem jeweiligen Objekt einen anderen Mobilitätstyp der Vielzahl von Mobilitätstypen zuzuweisen.

3. Vorrichtung (110) nach Anspruch 1 oder 2, wobei die Prozessoreinrichtung (120) ferner ausgebildet ist, auf der Grundlage der Überprüfung des einem jeweiligen Objekt (150a-m) zugewiesenen Mobilitätstyps eine Fehlermeldung zu erzeugen.

4. Vorrichtung (110) nach einem der vorstehenden Ansprüche, wobei die Prozessoreinrichtung (120) ausgebildet ist, ein neuronales Netzwerk zu implementieren, wobei das neuronale Netzwerk ausgebildet ist, jedem Objekt (150a-m) der Vielzahl von Objekten (150a-m) auf der Grundlage der Vielzahl von Sensordaten jeweils einen Mobilitätstyp der Vielzahl von Mobilitätstypen zuzuweisen.

5. Vorrichtung (110) nach einem der vorstehenden Ansprüche, wobei die Prozessoreinrichtung (120) ausgebildet ist, ein weiteres neuronales Netzwerk zu implementieren, wobei das weitere neuronale Netzwerk ausgebildet ist, auf der Grundlage der Vielzahl von Objektrelationen den einem jeweiligen Objekt (150a-m) zugewiesenen Mobilitätstyp zu überprüfen.

6. Vorrichtung (110) nach einem der vorstehenden Ansprüche, wobei die Prozessoreinrichtung (120) ferner ausgebildet ist, jedem Objekt (150a-m) der Vielzahl von Objekten (150a-m) auf der Grundlage der Vielzahl von Sensordaten jeweils einen Objekttyp einer Vielzahl von Objekttypen zuzuweisen und auf der Grundlage der Vielzahl von Objektrelationen und dem einen jeweiligen Objekt (150a-m) zugewiesenen Objekttyp den einem jeweiligen Objekt (150a-m) zugewiesenen Mobilitätstyp zu überprüfen.

7. Vorrichtung (110) nach Anspruch 6, wobei die Vielzahl von Objekttypen einen Ladungsträger, eine Gitterbox, eine Palette, eine Ware, ein Regal, eine Person, ein Flurförderzeug, ein Industrieroboter, eine Wand, eine Säule, eine Decke, einen Boden und/oder eine Rauminfrastruktur umfassen.

8. Vorrichtung (110) nach Anspruch 6 oder 7, wobei die Vielzahl von Sensordaten eine Vielzahl von Bilddaten der Vielzahl von Objekten (150a-m) umfasst und wobei die Prozessoreinrichtung (120) ferner ausgebildet ist, die Vielzahl von Bilddaten zu segmentieren, um jedem Objekt (150a-m) der Vielzahl von Objekten (150a-m) jeweils einen Objekttyp zuzuweisen.

9. Vorrichtung (110) nach einem der vorstehenden Ansprüche, wobei die Prozessoreinrichtung (120) ferner ausgebildet ist, die Vielzahl von Objektrelationen zu generieren.

10. Vorrichtung (110) nach einem der vorstehenden Ansprüche, wobei die Prozessoreinrichtung (120) ferner ausgebildet ist, auf der Grundlage der Vielzahl von Sensordaten der Vielzahl von Objekten (150a-m) eine digitale Karte der Umgebung zu erstellen.

11. Vorrichtung (110) nach einem der vorstehenden Ansprüche, wobei die Prozessoreinrichtung (120) ferner ausgebildet ist, auf der Grundlage der Vielzahl von Objektrelationen und einem oder mehreren dem einen jeweiligen Objekt (150a-m) in der Vergangenheit zugewiesenen Mobilitätstyps den einem jeweiligen Objekt (150a-m) zugewiesenen Mobilitätstyp zu überprüfen.

12. Flurförderzeug (100) oder Industrieroboter (100) zum Befördern eines Ladungsträgers, wobei das Flurförderzeug (100) oder der Industrieroboter (100) umfasst:
wenigstens einen Sensor (160), welcher ausgebildet ist, eine Vielzahl von Sensordaten einer Vielzahl von Objekten (150a-m) in einer Umgebung zu erfassen; und
eine Vorrichtung (110) nach einem der vorstehenden Ansprüche, welche ausgebildet ist, die Vielzahl von Objekten (150a-m) in der Umgebung zu klassifizieren.

13. Flurförderzeug (100) oder Industrieroboter (100) nach Anspruch 12, wobei der wenigstens eine Sensor (160) eine 2D-Kamera, eine 3D-Kamera, einen Radar-Sensor und/oder einen LiDAR-Sensor umfasst.

14. Verfahren (500) zum Klassifizieren einer Vielzahl von Objekten (150a-m) in einer Umgebung, wobei das Verfahren (500) umfasst:
fortlaufendes Erhalten (501) einer Vielzahl von Sensordaten der Vielzahl von Objekten (150a-m) von wenigstens einem Sensor (160);
fortlaufendes Zuweisen (503) eines Mobilitätstyps einer Vielzahl von Mobilitätstypen zu jedem Objekt (150a-m) der Vielzahl von Objekten (150a-m) auf der Grundlage der Vielzahl von Sensordaten, wobei die Vielzahl von Mobilitätstypen einen statischen, einen semi-dynamischen und einen dynamischen Mobilitätstyp umfassen; und
Überprüfen (505) des einem jeweiligen Objekt (150a-m) zugewiesenen Mobilitätstyps auf der Grundlage einer Vielzahl von Objektrelationen, wobei durch die Objektrelationen die Objekte (150a-m) in ein Verhältnis zueinander gesetzt werden, um einen zugewiesenen Mobilitätstyp zu überprüfen.

## Claims

1. Apparatus (110) for classifying a multiplicity of objects (150a-m) in an environment, wherein the apparatus (110) comprises:
a communication interface (130) which is designed to continuously receive a multiplicity of sensor data relating to the multiplicity of objects (150a-m) from at least one sensor (160); and
a processor device (120) which is designed to continuously assign one mobility type of a multiplicity of mobility types to each object (150a-m) of the multiplicity of objects (150a-m) on the basis of the multiplicity of sensor data, wherein the multiplicity of mobility types comprise a static, a semi-dynamic and a dynamic mobility type;
wherein the processor device (120) is further designed to check the mobility type assigned to a respective object (150a-m) on the basis of a multiplicity of object relationships, wherein the objects (150a-m) are related to one another by the object relationships in order to check an assigned mobility type.

2. Apparatus (110) according to Claim 1, wherein the processor device (120) is further designed, on the basis of the check of the mobility type assigned to a respective object, to assign a different mobility type of the multiplicity of mobility types to the respective object.

3. Apparatus (110) according to Claim 1 or 2, wherein the processor device (120) is further designed to generate an error message on the basis of the check of the mobility type assigned to a respective object (150am).

4. Apparatus (110) according to one of the preceding claims, wherein the processor device (120) is designed to implement a neural network, wherein the neural network is designed to assign one mobility type of the multiplicity of mobility types to each object (150a-m) of the multiplicity of objects (150a-m) on the basis of the multiplicity of sensor data.

5. Apparatus (110) according to one of the preceding claims, wherein the processor device (120) is designed to implement a further neural network, wherein the further neural network is designed to check the mobility type assigned to a respective object (150a-m) on the basis of the multiplicity of object relationships.

6. Apparatus (110) according to one of the preceding claims, wherein the processor device (120) is further designed to assign one object type of a multiplicity of object types to each object (150a-m) of the multiplicity of objects (150a-m) on the basis of the multiplicity of sensor data and to check the mobility type assigned to a respective object (150a-m) on the basis of the multiplicity of object relationships and the object type assigned to a respective object (150a-m).

7. Apparatus (110) according to Claim 6, wherein the multiplicity of object types comprise a load carrier, a wire-mesh box, a pallet, a product, a shelf, a person, an industrial truck, an industrial robot, a wall, a column, a ceiling, a floor and/or a room infrastructure.

8. Apparatus (110) according to Claim 6 or 7, wherein the multiplicity of sensor data comprise a multiplicity of image data relating to the multiplicity of objects (150a-m), and wherein the processor device (120) is further designed to segment the multiplicity of image data in order to assign one object type to each object (150a-m) of the multiplicity of objects (150a-m).

9. Apparatus (110) according to one of the preceding claims, wherein the processor device (120) is further designed to generate the multiplicity of object relationships.

10. Apparatus (110) according to one of the preceding claims, wherein the processor device (120) is further designed to create a digital map of the environment on the basis of the multiplicity of sensor data relating to the multiplicity of objects (150a-m).

11. Apparatus (110) according to one of the preceding claims, wherein the processor device (120) is further designed to check the mobility type assigned to a respective object (150a-m) on the basis of the multiplicity of object relationships and one or more mobility types assigned to the one respective object (150a-m) in the past.

12. Industrial truck (100) or industrial robot (100) for transporting a load carrier, wherein the industrial truck (100) or the industrial robot (100) comprises:
at least one sensor (160) which is designed to capture a multiplicity of sensor data relating to a multiplicity of objects (150a-m) in an environment; and
an apparatus (110) according to one of the preceding claims, which apparatus is designed to classify the multiplicity of objects (150a-m) in the environment.

13. Industrial truck (100) or industrial robot (100) according to Claim 12, wherein the at least one sensor (160) comprises a 2D camera, a 3D camera, a radar sensor and/or a LiDAR sensor.

14. Method (500) for classifying a multiplicity of objects (150a-m) in an environment, wherein the method (500) comprises:
continuously receiving (501) a multiplicity of sensor data relating to the multiplicity of objects (150a-m) from at least one sensor (160);
continuously assigning (503) a mobility type of a multiplicity of mobility types to each object (150a-m) of the multiplicity of objects (150a-m) on the basis of the multiplicity of sensor data, wherein the multiplicity of mobility types comprise a static, a semi-dynamic and a dynamic mobility type; and
checking (505) the mobility type assigned to a respective object (150a-m) on the basis of a multiplicity of object relationships, wherein the objects (150a-m) are related to one another by the object relationships in order to check an assigned mobility type.

## Revendications

1. Dispositif (110) de classification d'une pluralité d'objets (150a-m) dans un environnement, le dispositif (110) comprenant :
une interface de communication (130), qui est formée pour obtenir de manière continue d'au moins un capteur (160) une pluralité de données de capteur de la pluralité d'objets (150a-m) ; et
un système de traitement (120), qui est formé pour attribuer de manière continue à chaque objet (150a-m) de la pluralité d'objets (150a-m) sur la base de la pluralité de données de capteur respectivement un type de mobilité d'une pluralité de types de mobilité, la pluralité de types de mobilité comprenant un type de mobilité statique, un type de mobilité semi-dynamique et un type de mobilité dynamique ;
le système de traitement (120) étant en outre formé pour vérifier, sur la base d'une pluralité de relations d'objets, le type de mobilité attribué à un objet (150a-m) respectif, les relations d'objets mettant en relation les objets (150a-m) les uns avec les autres pour vérifier un type de mobilité attribué.

2. Dispositif (110) selon la revendication 1, le système de traitement (120) étant en outre formé pour attribuer un type de mobilité différent de la pluralité de types de mobilité à l'objet respectif sur la base de la vérification du type de mobilité attribué à un objet respectif.

3. Dispositif (110) selon la revendication 1 ou 2, le système de traitement (120) étant en outre formé pour générer un message d'erreur sur la base de la vérification du type de mobilité attribué à l'objet (150a-m) respectif.

4. Dispositif (110) selon l'une des revendications précédentes, le système de traitement (120) étant formé pour mettre en œuvre un réseau neuronal, le réseau neuronal étant formé pour attribuer à chaque objet (150a-m) de la pluralité d'objets (150a-m) respectivement un type de mobilité de la pluralité de types de mobilité en fonction de la pluralité de données de capteur.

5. Dispositif (110) selon l'une des revendications précédentes, le système de traitement (120) étant formé pour mettre en œuvre un autre réseau neuronal, l'autre réseau neuronal étant formé pour vérifier, sur la base de la pluralité de relations d'objets, le type de mobilité attribué à un objet (150a-m) respectif.

6. Dispositif (110) selon l'une des revendications précédentes, le système de traitement (120) étant en outre formé pour attribuer à chaque objet (150a-m) de la pluralité d'objets (150a-m) respectivement un type d'objet d'une pluralité de types d'objet sur la base de la pluralité de données de capteur et pour vérifier le type de mobilité attribué à un objet (150a-m) respectif sur la base de la pluralité de relations d'objets et du type d'objet attribué à un objet (150a-m) respectif.

7. Dispositif (110) selon la revendication 6, la pluralité de types d'objet comprenant un porte-charge, un boîtier en treillis, une palette, une marchandise, une étagère, une personne, un chariot de manutention, un robot industriel, une paroi, une colonne, un plafond, un sol et/ou une infrastructure de pièce.

8. Dispositif (110) selon la revendication 6 ou 7, la pluralité de données de capteur comprenant une pluralité de données d'image de la pluralité d'objets (150a-m) et le système de traitement (120) étant en outre formé pour segmenter la pluralité de données d'image pour attribuer à chaque objet (150a-m) de la pluralité d'objets (150a-m) respectivement un type d'objet.

9. Dispositif (110) selon l'une des revendications précédentes, le système de traitement (120) étant en outre formé pour générer la pluralité de relations d'objets.

10. Dispositif (110) selon l'une des revendications précédentes, le système de traitement (120) étant en outre formé pour créer une carte numérique de l'environnement sur la base de la pluralité de données de capteur de la pluralité d'objets (150a-m).

11. Dispositif (110) selon l'une des revendications précédentes, le système de traitement (120) étant en outre formé pour vérifier, sur la base de la pluralité de relations d'objets et d'un ou de plusieurs types de mobilité attribué(s) par le passé à un objet respectif (150a-m) le type de mobilité attribué à un objet (150a-m) respectif.

12. Chariot de manutention (100) ou robot industriel (100) pour le transport d'un porte-charge, le chariot de manutention (100) ou le robot industriel (100) comprenant :
au moins un capteur (160), qui est formé pour détecter une pluralité de données de capteur d'une pluralité d'objets (150a-m) dans un environnement ; et
un dispositif (110) selon l'une des revendications précédentes, qui est formé pour classifier la pluralité d'objets (150a-m) dans l'environnement.

13. Chariot de manutention (100) ou robot industriel (100) selon la revendication 12, l'au moins un capteur (160) comprenant une caméra 2D, une caméra 3D, un capteur radar et/ou un capteur LiDAR.

14. Procédé (500) de classification d'une pluralité d'objets (150a-m) dans un environnement, le procédé (500) comprenant :
obtention (501) en continu d'une pluralité de données de capteur de la pluralité d'objets (150a-m) d'au moins un capteur (160) ;
attribution (503) en continu d'un type de mobilité d'une pluralité de types de mobilité à chaque objet (150a-m) de la pluralité d'objets (150a-m) sur la base de la pluralité de données de capteur, la pluralité de types de mobilité comprenant un type de mobilité statique, un type de mobilité semi-dynamique et un type de mobilité dynamique ; et
vérification (505) du type de mobilité attribué à un objet (150a-m) respectif sur la base d'une pluralité de relations d'objets, les relations d'objets mettant en relation les objets (150a-m) les uns avec les autres pour vérifier un type de mobilité attribué.
